Europäisches Patentamt

European Patent Office

Office européen des brevets

(19)

(11) Publication number: **0 457 709 A1**

# (12) EUROPEAN PATENT APPLICATION

(21) Application number: **91500016.0**

(22) Date of filing: **14.02.91**

(51) Int. Cl.⁵: **H04L 9/10**, G09C 1/00

(30) Priority: **10.05.90 ES 9001310**

(43) Date of publication of application:
**21.11.91 Bulletin 91/47**

(84) Designated Contracting States:
**AT BE CH DE DK FR GB GR IT LI LU NL SE**

(71) Applicant: **AMPER DATOS S.A.**
**C/ Tracia, 27**
**E-28037 Madrid (ES)**

(72) Inventor: **Galilea Lopez, Juan Carlos**
**C/ Tracia, 25-27**
**E-28037 Madrid (ES)**

(74) Representative: **Carpintero Lopez, Francisco**
**HERRERO & ASOCIADOS, S.L. Alcalá, 21**
**E-28014 Madrid (ES)**

(54) **Cipher machine.**

(57)    The cipher machine aimed at keeping data circulating in a communications net strictly confidential and undisclosed using cryptographic methods comprises a tabletop type accessory holding a power supply plate (8) and a CPU, cipher and lines plate (9), functionally associated to allow the machine to operate, with the assistance of user interaction means, some for the machine to operate, such as a feed connector (10), a power switch (11), a fuse (12) and a test button(13), and others for same to be used, such as connectors (1), (14) and (15), a sixteen-digit double-line alphanumeric LCD display (2), a twelve-key pad (3) and feed, alarm and line data circulation indicators (4), (5), (6) and (7), respectively.

FIG.-I

## OBJECT OF THE INVENTION

The present invention relates, as set forth in the title hereto, to a cipher machine aimed at keeping data circulating in a communications net strictly confidential and undisclosed, using cryptographic methods.

## BACKGROUND TO THE INVENTION

Cryptography is the art of devising methode to render a message unintelligible so that it is only comprehensible for the receiver.

Cryptography defines two basic methods : substitution cipher whereby a coded message is obtained replacing each plain text letter by a ciphered alpabet letter, and transposition cipher, whereby the message is rendered unintelligible by rearranging the plain text characters.

These two methods started to evolve when computers first apppeared, and new algorithms now comprise modifying the bits at each character level, according to a given code, this becoming a sophisticated method of transposition.

The cipher systems available in the market use different algorithms based on modifying bits, the advantage of the COD X.25 KS machine lying in the use of the so-called DES ( Data Encryption Standard), defined as a standard in the USA by the National Bureau of Standards and therefore theroughly studied, which allows its high reliability to be guaranteed.

Furthermore, such algorithm is incorporated to the machine's hardware, thus affording greater data processing speed and security than when incorporated to the software, as is the case of some rival systems.

Among essential COD.X.25 innovations, the following could be mentioned:

  – Ciphers and deciphers data in real time in X.25 protocol communications nets with no appreciable delay in data transfer, and no additional character being added to the user data, which latter circumstance is the norm in other systems.

  – Its modular structure allows various configurations, thereby to conform to user needs, with its larger model allowing the cipher plate to form part of a distributed system holding a high-speed data bus.

  – Besides the security advantage of using the DES algorithm, the machine provides five other security levels hindering and preventing its being used delinquently.

  – The cost of the COD X.25 KS machine is considerably less than its rivals', and rendering a data network secure will no longer represent the economical problem it was heretofore.

## DESCRIPTION OF THE INVENTION

The cipher machine subject hereof carries out analyses of the screens circulating through one or more tie lines, the level 2 (tie line) and level 3 (net) heads being recognised through each of them and the information to be ciphered or deciphered which corresponds to the level 3 user data being detetermined, a tie line being deemed to be the logical path formed by an ingoing line and an outgoing line, digitally transmitting information. The tie line is full-duplex, and the machine will therefore cipher the information leaving a customer and will decipher it in the opposite direction, viz. when received by the customer.

All of this emerges as a sort of tabletop accessory, with the back fitted with the various plates forming same, specifically a power supply plate and a CPU, cipher and lines plate, which plate will allow one or two tie lines, depending on whether there are one or two channels, and optionally up to four more line plates, each holding two tie lines, can be added, to be set up as two basic accessories joined together.

The machine front has an outer terminal connector, a sixteen-character double-line alphanumeric display, a twelve-key numerical pad, four line activity indicators, a power indicator and an alarm indicator.

The machine's sides have grids for ventilation purposes, which takes place by natural convection, forced ventilation being unnecessary.

The machine must be located between a terminal and the modem associated to same.

The cipher machine, besides being appropriate to be used as part of a security system, is provided with intrinsic mechanisms hindering and preventing its being used delinquently, for when the plate is removed from the accessory, all the data in the memory, including stored classes, are automatically cleared.

From the electrical standpoint, access to the memory bus from the outside to read the codes is futile since same are stored ciphered. The code ciphering same is called the master code, and is only found in the machine's bus within a set time and is inaccessible.

If the machine's configuration is in any way to be modified, the pass word must first of all be given directly to the different applicable menus; if the word is not recognised after three attempts, the memory is cleared in order to prevent any type of sabotage and configuration will again be necessary. The same happens when the machine requests that the master code be keyed in since it does not reside in the system, when all the data in the memory will be cleared if the correct version is not given after three attempts.

It is also possible to clear all system codes together with the data contained in a RAM memory immediately, and this can be effected at any time by merely pressing a couple of keys at the same time.

Reconfiguration will be necessary after they are pushed.

Furthermore, when keying in all parameters that are essential for process security, such as master code, cipher code or pass word, the characters keyed in are concealed and are replaced by asterisks so that someone near the computer cannot read same. With this same idea in mind, special care was taken when designing the display, suitably adapting size, brightness and contrast parameters in order that the messages can only be read by the operator.

## DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1.- Is a front view of the cipher machine showing the operator interacting elements.

Figure 2. - Is a rear view of the machine, in its fullest configuration, showing the elements allowing it to function.

## PREFERRED EMBODIMENT OF THE DRAWINGS

In the light of these figures, it can be seen that the cipher machine subject hereof comprises an external terminal connector (1), a sixteen-digit double-line alphanumeric LCD display (2), a twelve-key pad (3), two indicators, namely power (4) and alarm (5) indicator, and four other indicators, grouped in twos, for data circulating in lines 1 and 2 ( 6 ), and data circulating in lines 3 and 4 (7), these latter being inactive when the machine only has the one channel.

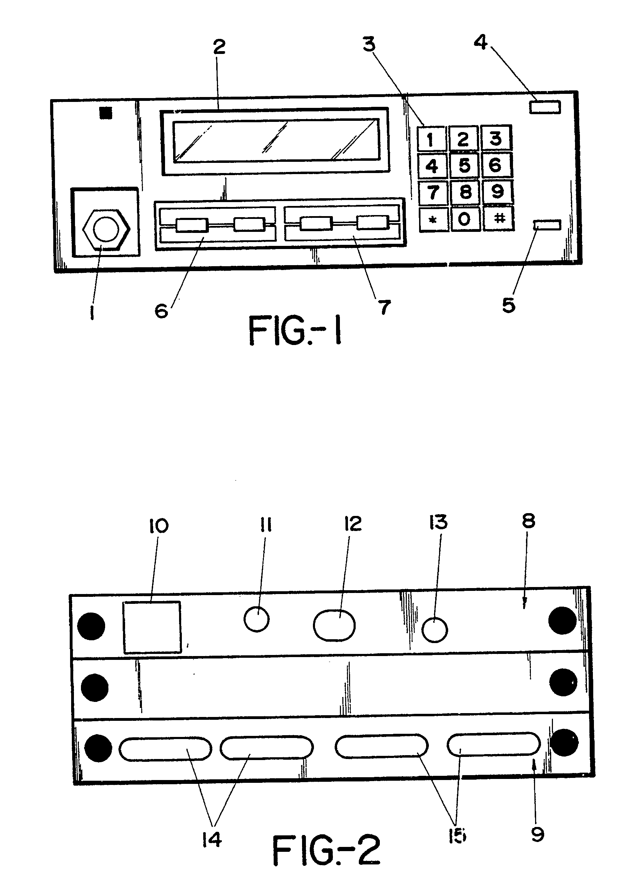

The back, as shown in figure 2, is provided with the power supply plate ( 8 ) and the CPU, cipher and lines plate ( 9 ), the former being associated to a feed connector ( 10 ), power switch (11), fuse (12) and test button (13), while the latter is provided with two connectors for channel 1 lines 1 and 2 (14) and connectors for channel 2 lines 3 and 4 ( 15 ).

The cipher algorithm used by the system is the DES (Data Encryption Standard) as defined by the NBS' (National Bureau of Standards) FIPS PUB 46. This document defines several operating modes, of which the machine carries out three: eight-bit CFB, CBC, and ECB. In addition to these, the cipher machine affords two more, a CLEAR mode inhibiting the data cipher and decipher function, information circulating through the channel being merely repeated, and a CONTENTION mode where receipt and transmission of data is disallowed, this being just like disconnecting the line, the machine acting as an open switch, both for the data line and the associated modem signals.

There are a series of menus to handle and configure the machine accessible by means of a pass word. There are two mechanisms to insert or modify configuration data: with the keypard and the display at the front of the machine or else with an asynchronous terminal plugged through connector (1) appropriate therefor. Operation from either place is the same, though the latter procedure makes certain configuration elements easier and quicker, one such element being the insertion of codes (up to 99), character insertion being faster using the remote configuration.

The cipher machine has a series of procedures to verify that the main modules are working properly and to detect, if there is a failure, which part of the system is affected. These procedures may be selected by the serviceman to carry out a machine diagnosis.

The system is provided with a self-protection mechanism to detect failures, derived from the so-called "Watch Dog Timer", and if triggered, lights the alarm indicator (5) and causes the application to be reset.

Each time the system is switched on or the test button ( 13 ) is pressed, self-testing begins and respective operation of the various modules is automatically verified without modifying the information contained therein.

We feel that the device has now been sufficiently described for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

## Claims

1. - Cipher machine, aimed at keeping data circulation through a communications net strictly confidential and undisclosed using cryptographic methods, essentially characterised in comprising the functional association of a power supply plate (8) and a CPU, cipher and lines plate (9), all inside a tabletop type accessory, its front having an outer terminal connector (1), a sixteen-digit double-line alphanumeric LCD display (2), a twelve-key pad (3), two indicators, viz. power (4) and alarm (5) indicators, and four other indicators, grouped in twos ( 6-7 ), for the data circulating in the lines; the rear part being in turn provided with the elements associated to each plate.

2. - Cipher machine, according to claim 1, characterised in that the power supply plate ( 8 ) is provided with a feed connector (10), a power switch (11), a fuse (12) and a test switch (13).

3. - Cipher machine, according to claim 1, chararacterised in that the CPU, cipher and lines plate is provided with two connectors ( 14 ) for one of the channels and ( 15 ) for the other channel.

# FIG.-1

# FIG.-2

**European Patent Office**

**EUROPEAN SEARCH REPORT**

Application Number

| | DOCUMENTS CONSIDERED TO BE RELEVANT | | EP 91500016.0 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | US - A - 3 878 332 (MORGAN et al.) * Column 2, line 63 - column 6, line 56; fig. 1,2 * | 1,2 | H 04 L 9/10 G 09 C 1/00 |
| A | US - A - 4 079 188 (KINCH JR. et al.) * Abstract; column 6, line 47 - column 9, line 5; fig. 5 * | 1 | |
| A | US - A - 4 133 973 (BRANSCOME et al.) * Column 1, line 51 - column 2, line 9; column 3, line 5 - column7, line 49; fig. 1, 2 * | 1,2 | |
| A | US - A - 4 907 275 (HASHIMOTO) * Column 2, line 65 - column 4, line 2; fig. 1-2B * | 1 | |
| A | WO - A1 - 87/07 796 (DATAKONSULT) * Abstract * | 1 | TECHNICAL FIELDS SEARCHED (Int. Cl.5) H 04 L G 09 C |

The present search report has been drawn up for all claims

| Place of search | Date of completion of the search | Examiner |
|---|---|---|
| VIENNA | 04-09-1991 | HAJOS |